# EUROPÄISCHE PATENTSCHRIFT

(11) **EP 1 371 290 B1**
(45) Veröffentlichungstag und Bekanntmachung des Hinweises auf die Patenterteilung: **10.05.2006**
(21) Anmeldenummer: 03012760.9
(22) Anmeldetag: 05.06.2003
(51) Int. Cl.: A21B 1/44

(54) **Stikkenofen**
Rack oven
Four à chariots

(30) Priorität: 15.06.2002 DE 10226859; 19.03.2003 DE 10312279
(43) Veröffentlichungstag der Anmeldung: 17.12.2003
(73) Patentinhaber: Werner & Pfleiderer Lebensmitteltechnik GmbH, 91550 Dinkelsbühl (DE)
(72) Erfinder: Hübener, Edgar, 91522 Ansbach (DE); Heller, Anton, 84424 Isen (DE)
(74) Vertreter: Rau, Manfred

(56) Entgegenhaltungen:
- DE-A- 10 048 116
- DE-U- 20 117 610
- US-A- 1 957 811
- US-A- 4 305 329
- US-A- 5 119 719
- US-A- 5 906 855

## Beschreibung

Die Erfindung betrifft einen Stikkenofen mit rotierendem Backwagen.

Ein Stikkenofen nach dem Oberbegriff des Anspruchs 1 mit rotierendem Backwagen ist aus der DE 201 17 610 U1 bekannt. Bei dem bekannten Stikkenofen ergibt sich das Problem, dass sich unabhängig von der Strömungsgeschwindigkeit der eingeleiteten Umluft und unabhängig von der eingestellten Temperatur der Umluft bestimmte Typen von Backgütern nicht mit gleicher Qualität verarbeiten lassen.

Es ist daher die Aufgabe der vorliegenden Erfindung, einen Stikkenofen der eingangs genannten Art derart weiterzubilden, dass für unterschiedliche Typen von Backgütem ein gleichbleibend gutes Backergebnis erzielt wird. Diese Aufgabe ist erfindungsgemäß gelöst durch einen Stikkenofen mit den Merkmalen im Kennzeichnungsteil des Anspruchs 1.

Erfindungsgemäß wurde erkannt, dass auch die Drehzahl des Backwagens im Stikkenofen die Backqualität beeinflusst. Dies ist ein zunächst überraschendes Ergebnis, da die Wärmeaufnahme des Backgutes im Backraum eigentlich nur von der Temperatur der Umluft und darüber hinaus noch von deren Strömungsgeschwindigkeit abhängen sollte. Aufgrund der innerhalb des Backraums ungleichen Temperaturverteilung der Umluft mit einer im Bereich der Umluft-Eintritts-Öffnungen höheren Temperatur ergibt sich bei drehendem Backwagen eine mit der Umdrehung zyklische Temperierung des Backgutes. Diese Temperierung ist, wie erkannt wurde, umso gleichmäßiger, je schneller der Backwagen im Backraum rotiert. Hierdurch lässt sich über die Drehzahl des Backwagens im Backraum die Backqualität beeinflussen. Je nach Ausführung des Stikkenofens kann die Antriebseinrichtung unterhalb oder oberhalb des Etagen-Backwagens angeordnet sein.

Durch die Drehzahl-Variation während der Umdrehung des Etagen-Backwagens lässt sich eine sehr sensible Anpassung der thermischen Verhältnisse für Backgut während des Backvorgangs im Backraum erreichen.

Eine Antriebseinrichtung gemäß Anspruch 2 ist einfach und robust.

Ein Frequenz-Umrichter gemäß Anspruch 3 führt zur Möglichkeit einer kontinuierlichen Vorgabe von Backwagen-Drehzahlen über der Zeit. Die Backqualität kann auf diese Weise fein beeinflusst werden.

Ein Stikkenofen gemäß Anspruch 4 lässt sich flexibel auf verschiedene Typen von Backgut einstellen.

Eine Drehzahl-Variation gemäß Anspruch 5 gewährleistet, dass Backgut, welches während der Umdrehung des Etagen-Backwagens im Backraum den Umluft-Eintritts-Öffnungen näher kommt als zum Beispiel bezüglich der Drehachse weiter innen angeordnetes Backgut, keinen zu starken Temperaturschwankungen ausgesetzt ist. Dies verbessert die Gleichmäßigkeit des Backergebnisses weiter.

Eine Drehzahl-Variation gemäß Anspruch 6 gewährleistet, dass zum Beispiel Backgut, welches aufgrund seiner relativ weit entfernten Anordnung zur Drehachse des Etagen-Backwagens nicht so effizient mit Umluft umströmt wird als der Drehachse des Backwagens näher benachbartes Backgut, ebenfalls effizient gebacken wird.

Etagen gemäß Anspruch 7 lassen sich mit derzeit gebräuchlichen Backblechen bestücken.

Die Vorteile einer Antriebseinrichtung gemäß den Ansprüchen 8 bis 12 entsprechen denjenigen, die im Zusammenhang mit Anspruch 5 und 6 ausgeführt wurden.

Weitere Merkmale, Vorteile und Einzelheiten der Erfindung ergeben sich aus der nachfolgenden Beschreibung zweier Ausführungsbeispiele der Erfindung anhand der Zeichnung. Es zeigt:
- Fig. 1: einen Stikkenofen mit rotierendem Backwagen in einer teilweise aufgebrochenen Ansicht,
- Fig. 2: ein Blockschaltbild einer Einrichtung zur Drehzahlsteuerung eines Getriebemotors zur Rotation des Backwagens;
- Fig. 3: ein Diagramm der Backwagen-Drehgeschwindigkeit über die Zeit für den Stikkenofen gemäß Fig. 1;
- Fig. 4: einen längs einer horizontalen Ebene geführten, gebrochenen Schnitt im Bereich des Backwagens durch den Stikkenofen von Fig. 1;
- Fig. 5: zwei zeitliche Darstellungen A, B, die die Aufenthaltsdauern eines Backgutes auf dem Backwagen des Stikkenofens gemäß Fig. 1 innerhalb und außerhalb eines Bereichs heißerer Umluft für zwei verschiedene Drehzahlen des Backwagens wiedergeben, sowie ein Diagramm, welches die Temperatur des mit den beiden Drehzahlen rotierenden Backguts im gleichen Zeitraum zeigt; und
- Fig. 6: einen alternativen Stikkenofen mit rotierendem Backwagen;
- Fig. 7: einen längs einer horizontalen Ebene geführten, gebrochenen Schnitt im Bereich eines Backwagens eines weiteren alternativen Stikkenofens;
- Fig. 8: eine zu Fig. 7 ähnliche Darstellung mit dem Backwagen in einer anderen Momentanposition;
- Fig. 9: ein Diagramm der Backwagen-Drehgeschwindigkeit über die Zeit während eines vollen Umlaufes des Backwagens für den Stikkenofen gemäß den Fig. 7 und 8;
- Fig. 10 und 11: zu den Fig. 7 und 8 ähnliche Darstellungen eines weiteren alternativen Stikkenofens;
- Fig. 12: ein zu Fig. 9 ähnliches Diagramm für den Stikkenofen gemäß den Fig. 10 und 11.

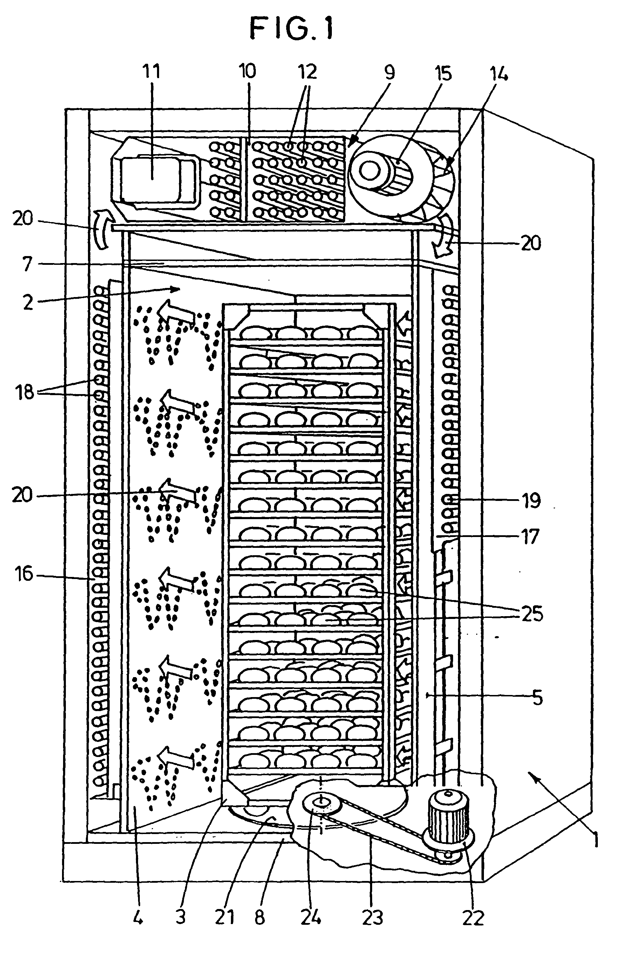

Der in Fig. 1 dargestellte Stikkenofen weist ein etwa quaderförmiges OfenGehäuse 1 mit einem Backraum 2 auf, in den ein Etagen-Backwagen 3 eingefahren werden kann. Der Backraum 2 weist zwei einander gegenüberliegende, vertikal verlaufende Backraum-Begrenzungs-Wände 4, 5 auf, die parallel zueinander angeordnet sind, und die zwischen sich den Backwagen 3 aufnehmen. Der Backraum 2 wird weiterhin zur Rückseite durch eine Rückwand 6, nach oben durch eine Decke 7, nach unten durch einen Boden 8 und zur Vorderseite durch eine nicht dargestellte Tür begrenzt.

Oberhalb des Backraums 2 ist im Gehäuse 1 eine Wärmetauscher-Einheit 9 angeordnet, die von einem kastenförmigen Wärmetauscher-Gehäuse 10 umschlossen ist. In dem Gehäuse 10 ist ein nur angedeuteter Brenner 11 angeordnet, dessen Rauchgase durch Wärmetauscher-Rohre 12 geleitet werden und durch einen nicht dargestellten Rauchgas-Abzug das Gehäuse 1 verlassen.

Im oberen Teil des Gehäuses 1 ist ein Gebläse 14 angeordnet, das von einem Elektro-Motor 15 antreibbar ist. Mittels des Gebläses 14 ist zum Backen dienende heiße Luft im Umluft-Verfahren durch das Gehäuse 1 umwälzbar.

Beiderseits der Wände 4, 5 sind einander gegenüberliegend Umluft-Kanäle 16 ausgebildet. Zugeordnet zu diesen Kanälen 16, 17 sind in den Wänden 4, 5 Umluft-Austritts-Öffnungen 18 und Umluft-Eintritts-Öffnungen 19 ausgebildet, durch die hindurch die Kanäle 16, 17 mit dem Backraum 2 verbunden werden.

Das Gebläse 14 saugt in der Wärmetauscher-Einheit 9 erhitzte Umluft aus dem Wärmetauscher-Gehäuse 10 an. Die vom Gebläse 14 durch die Wärmetauscher-Rohre 12 angesaugte erhitzte Umluft wird also entsprechend den in Fig. 1 dargestellten Strömungs-Richtungspfeilen 20 in den ersten Umluft-Kanal 17 gedrückt und strömt von dort durch die Umluft-Eintritts-Öffnungen 19 in den Backraum 2 ein. Die Umluft durchströmt den Backraum 2 über dessen volle Höhe entsprechend den eingezeichneten Strömungs-Richtungspfeilen 20 und tritt durch die Umluft-Austritts-Öffnungen 18 in den Umluft-Kanal 16 aus. Im Backraum 2 wird die Temperatur der Umluft bei der Quer-Durchströmung durch entsprechende Wärmeaufnahme des Backgutes abgekühlt. Die abgekühlte Umluft tritt aus dem Umluft-Kanal 16 wieder in das Gehäuse 10 der Wärmetauscher-Einheit 9 und wird dort wieder aufgeheizt.

Im Boden 8 des Backraums 2 ist ein Drehteller 21 angebracht, der während des Backvorgangs mit Hilfe eines Getriebemotors 22 über eine Kette 23 und ein drehfest mit dem Drehteller 21 verbundenes Ritzel 24 angetrieben wird, sodass der auf ihm stehende Backwagen 3 sich während des Backvorgangs ständig dreht. Hierdurch werden einzelne Backgüter 25, die auf den einzelnen Etagen des Backwagens 3 angeordnet sind, mit heißerer oder bereits abgekühlter Umluft beaufschlagt, wie noch im Detail beschrieben wird.

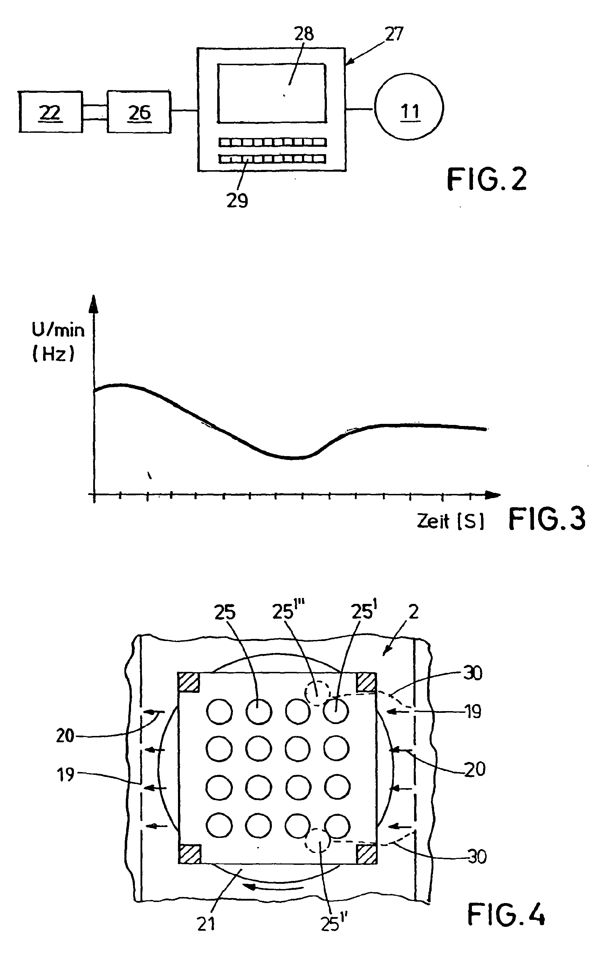

Fig. 2 zeigt eine Ansteuereinrichtung zur Vorgabe der Drehzahl des Getriebemotors 22 und damit der Drehzahl des Drehtellers 21 und des darauf befindlichen Backwagens 3. Der Getriebemotor 22 steht mit einem Frequenz-Umrichter 26 in Signalverbindung. Dieser wird von einem Steuerrechner 27 angesteuert, der ein Display 28 sowie eine Eingabetastatur 29 aufweist. Über letztere wird für einzelne Backschritte von beispielsweise je 120 Sekunden Dauer die Anzahl der Umdrehungen des Backwagens 3 in Hz oder U/min eingegeben. Die Drehzahl des Backwagens 3 kann also über die gesamte Backzeit über den Steuerrechner 27 programmierbar verändert werden. Da es mittels des Frequenz-Umrichters 26 möglich ist, Drehzahlrampen zu fahren, das heißt kontinuierliche Drehzahlverläufe einzustellen, ergeben sich stetige Verläufe der Umdrehungsgeschwindigkeit des Backwagens 3, wie beispielhaft in Fig. 3 dargestellt.

In gleicher Weise kann auch anstelle der Einzelangabe der einzelnen Backschritte ein vollständiges Backprogramm eingegeben werden oder ein einmal manuell eingegebenes Backprogramm immer wieder aufgerufen werden.

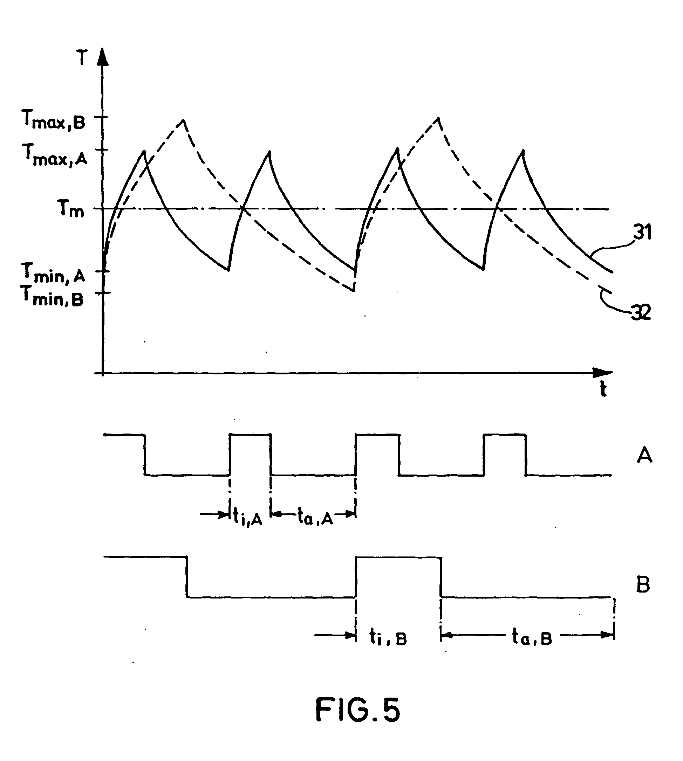

Die thermischen Verhältnisse für die Backgüter 25 während des Backvorgangs im Backraum 2 verdeutlichen die Fig. 4 und 5:

Unmittelbar nach dem Eintritt in den Backraum 2 durch die Umluft-Eintritts-Öffnungen 19 ist der Umluftstrom 20 am heißesten. Der Backraum-Begrenzungs-Wand 5 benachbart liegt demnach im Backraum 2 ein Volumenbereich 30 heißerer Umluft vor, der unscharf durch das Muster der Umluft-Eintritts-Öffnungen 19 lateral begrenzt ist, wie in Fig. 4 durch gestrichelte Linien angedeutet. Außerhalb des Volumenbereichs 30 weist die Umluft eine im Vergleich zur Temperatur innerhalb des Volumenbereichs 30 deutlich niedrigere Temperatur auf.

Den Volumenbereich 30 heißerer Umluft hat in der Momentaufnahme des Backwagens 3 von Fig. 4 ein Backgut 25¹ gerade vollständig erreicht. Während eines Zeitraums tᵢ befindet sich das Backgut 25¹ im Volumenbereich 30, bis es diesen in der in Fig. 4 gestrichelt wiedergegebenen momentanen Drehposition 25^{1'} wieder vollständig verlässt. Das Backgut 25¹ ist anschließend während eines Zeitraums tₐ außerhalb des Volumenbereichs 30, bis es in der in der Fig. 4 ebenfalls gestrichelt angedeuteten Momentanposition 25¹" wieder in den Volumenbereich 30 eintritt.

Die Temperaturverhältnisse des Backguts 25¹ bei zwei verschiedenen Umdrehungsgeschwindigkeiten A, B des Backwagens 3 sind in Fig. 5 dargestellt. Hierbei ist die Umdrehungsgeschwindigkeit A doppelt so groß wie die Umdrehungsgeschwindigkeit B, sodass bei der Umdrehungsgeschwindigkeit A sowohl die Verweilzeit t_{i,A} innerhalb des Volumenbereichs 30 als auch die Verweilzeit t_{a,A} außerhalb des Volumenbereichs 30 doppelt so groß sind wie die entsprechenden Verweilzeiten t_{i, B}, t_{a, B} bei der halben Umdrehungsgeschwindigkeit B.

Das Temperatur/Zeit-Diagramm in Fig. 5 oben gibt in willkürlichen Temperatureinheiten und mit übertriebener Temperaturspreizung die zugehörigen Temperaturverhältnisse für das Backgut 25¹ wieder. Hierbei ist eine durchgezogene Temperaturkurve 31 in dem Temperatur/Zeit-Diagramm der Umdrehungsgeschwindigkeit A und eine gestrichelte Temperaturkurve 32 der Umdrehungsgeschwindigkeit B zugeordnet.

Beide Temperaturkurven 31, 32 für das Backgut 25¹ pendeln entsprechend den jeweiligen Umdrehungsgeschwindigkeiten A, B um eine mittlere Temperatur Tₘ. Da die Verweildauern tᵢ, tₐ bei der Umdrehungsgeschwindigkeit A geringer sind als bei der Umdrehungsgeschwindigkeit B, sind die Temperaturausschläge bei der Temperaturkurve 31 nicht so groß wie diejenigen bei der Temperaturkurve 32. So ist die maximale Temperatur des Backguts 25¹ bei der Geschwindigkeit A, T_{max, A} geringer als diejenige bei der Umdrehungsgeschwindigkeit B, T_{max, B}. Entsprechend ist die minimale Temperatur des Backguts 25¹ bei der Umdrehungsgeschwindigkeit A, T_{min, A} höher als diejenige bei der Umdrehungsgeschwindigkeit B, T_{min, B}. Insgesamt ergibt sich, dass das Backgut 25¹ bei der höheren Umdrehungsgeschwindigkeit A gleichmäßiger erwärmt ist als bei der niedrigeren Umdrehungsgeschwindigkeit B. Gleichzeitig wird bei der höheren Umdrehungsgeschwindigkeit A eine niedrigere Spitzentemperatur erreicht als bei der niedrigeren Umdrehungsgeschwindigkeit B.

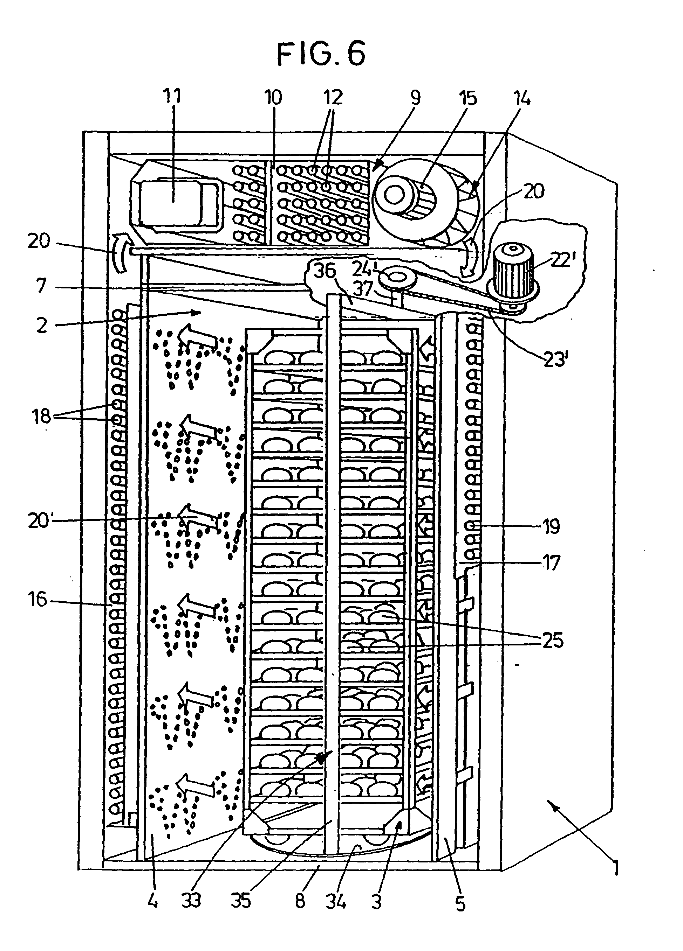

Fig. 6 zeigt einen alternativen Stikkenofen mit rotierendem Backwagen 3. Bauteile, die schon unter Bezugnahme auf den Stikkenofen nach den Fig. 1 bis 5 erläutert wurden, tragen die gleichen Bezugszeichen und werden nicht nochmals im Einzelnen diskutiert.

Beim Stikkenofen der Fig. 6 ist im Backraum 2 ein Drehgestell 33 angebracht, welches an den Enden seiner zentralen Drehachse oben und unten über nicht näher dargestellte Axial/Radial-Lager gelagert ist. Den bodenseitigen Abschluss des Drehgestells 33 bildet eine runde Bodenplatte 34, auf der der Backwagen 3 angeordnet ist, sodass die Bodenplatte 34 des Stikkenofens gemäß Fig. 6 dem Drehteller 21 des Stikkenofens gemäß Fig. 1 entspricht. Von zwei gegenüberliegenden Umfangsbereichen der runden Bodenplatte 34 erstrecken sich den Backwagen 3 zwischen sich aufnehmend zwei vertikale Kastenprofilstangen 35 durch den Backraum 2 nach oben. Diese sind oberhalb des Backwagens 3 über eine ebenfalls als kastenförmige Profilstange ausgeführte Querstange 36 miteinander verbunden.

Ein mit dem oberen Abschnitt der Drehachse des Drehgestells 33 zusammenfallender Profilstangenabschnitt 37 ist mit der Querstange 36 verschweißt. Dieser wird zur Rotation des Backwagens 3 in analoger Weise über ein Ritzel 24', das drehfest mit dem Profilstangenabschnitt 37 verbunden ist, eine Kette 23' und einen Getriebemotor 22' angetrieben, wie dies oben unter Bezugnahme auf Fig. 1 schon erläutert wurde.

Bei beiden Ausführungsbeispielen wird der Elektro-Motor 15 des Gebläses 14 mittels eines Frequenz-Umrichters angesteuert, der nicht dargestellt ist, da er handelsüblich ist. Die vom Frequenz-Umrichter auf den Motor 15 abgegebene Frequenz kann über ein Backprogramm gesteuert werden, sodass die Drehzahl und damit die Förderleistung des Gebläses 14 entsprechend den Backbedürfnissen gesteuert wird. Hierdurch kann der unterschiedliche Wärmebedarf des Backgutes 25 über den Verlauf des Backprozesses gesteuert werden. Eine höhere Umwälzgeschwindigkeit der Umluft bei entsprechend höherer Drehzahl des Gebläses 14 bzw. 14 bedeutet einen höheren Wärmeübergang und damit eine stärkere Wärmezuführ auf das Backgut 25 und umgekehrt.

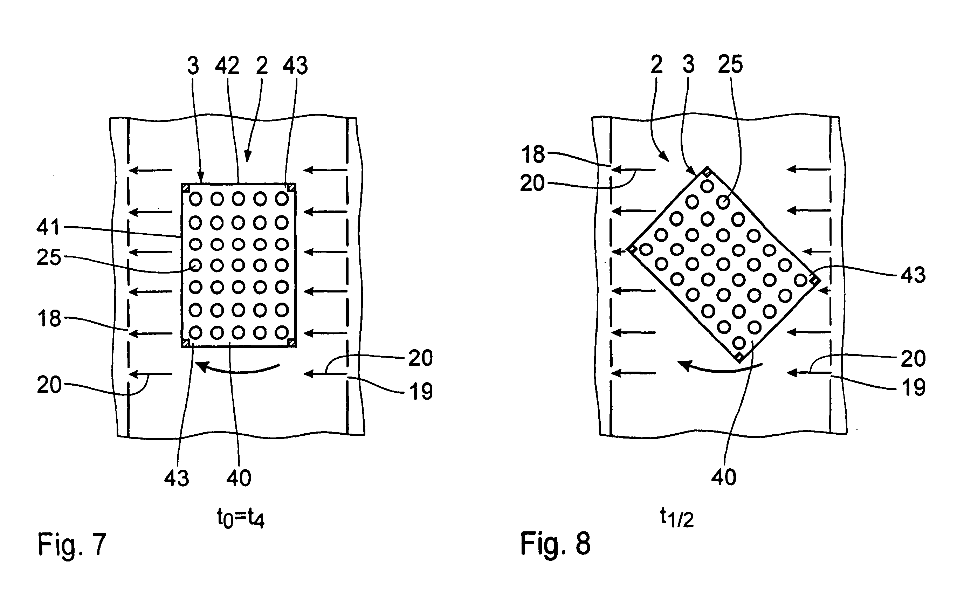

Eine weitere Variante eines Stikkenofens mit rotierendem Backwagen ist in den Fig. 7 und 8 dargestellt. Gezeigt sind zwei Momentaufnahmen bei der Drehung des Backwagens im Stikkenofen. Bauteile, die schon unter Bezugnahme auf die Stikkenöfen nach den Fig. 1 bis 6 erläutert wurden, tragen die gleichen Bezugszeichen und werden nicht nochmals im Einzelnen diskutiert.

Im Unterschied zu den Stikkenöfen der Fig. 1 bis 6 sind Etagen 40 des Etagen-Backwagens 3 des Stikkenofens nach den Fig. 7 und 8 nicht quadratisch, sondern rechteckig ausgeführt mit Längsseiten 41, Schmalseiten 42 sowie Eckabschnitten 43. Auch hier rotiert der Backwagen 3 um eine bezüglich der Etagen 40 zentrale, vertikale Drehachse. Die Eckabschnitte 43 kommen, wie Fig. 8 zeigt, während der Umdrehung des Backwagens 3 im Backraum 2 des Stikkenofens den Umluft-Eintritts-Öffnungen näher als andere Abschnitte der Etagen 40, zum Beispiel als die Längsseiten 41. Gleichzeitig stellen aufgrund der rechteckigen und nicht quadratischen Geometrie der Etagen 40 auch die Schmalseiten 42 Abschnitte des Backwagens 3 dar, die während der Umdrehung von diesem im Backraum 2 den Umluft-Eintritts-Öffnungen näher benachbart sind als andere Abschnitte von diesem, z. B. als die Längsseiten 41.

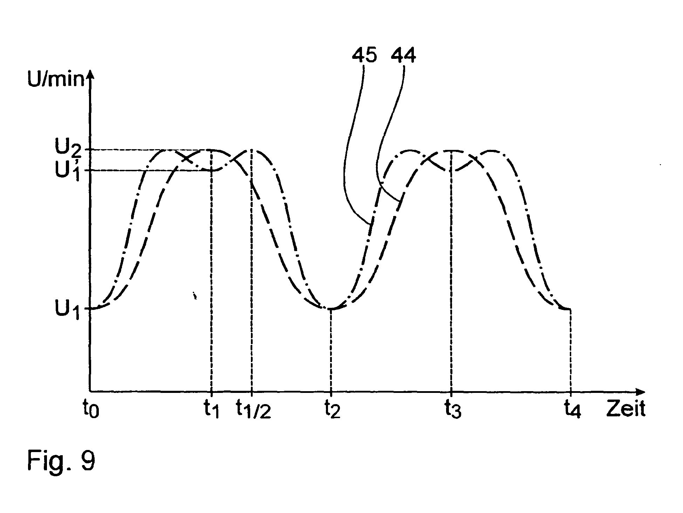

Über den Steuerrechner 27 und den Frequenz-Umrichter 26 ist der Getriebemotor 22 des Stikkenofens nach den Fig. 7 und 8 derart drehzahlgesteuert, dass die Drehzahl des Backwagens 3 während einer Umdrehung von diesem variiert wird. Eine erste Variante einer derartigen Drehzahl-Variation ist als gestrichelte Linie 44 im Drehzahl-Zeit-Diagramm der Fig. 9 dargestellt. Die Stellung des Backwagens 3 zum Zeitpunkt t₀, also zu Beginn der Zeitachse des Diagramms der Fig. 9, ist in Fig. 7 dargestellt. Nach einer vollständigen Umdrehung um 360° ist der Zeitpunkt t₄ und wiederum die Stellung des Backwagens 3, die in Fig. 7 gezeigt ist, erreicht. Fig. 8 zeigt den Backwagen 3 in einer Zwischenstellung zu einem Zeitpunkt t_{1/2}, der in Fig. 9 zwischen Zeitpunkten t₁ und t₂ eingezeichnet ist.

Während der Umdrehung des Backwagens 3 im Backraum 2 ist an den Zeitpunkten t₀ und t₂ eine der Längsseiten 41 der Etagen 40 den Umluft-Eintritts-Öffnungen 19 und die andere Längsseite 41 den Umluft-Austritts-Öffnungen 18 zugewandt. Zu den Zeitpunkten t₁ und t₃ ist eine Schmalseite 42 den Umluft-Eintritts-Öffnungen 19 und die andere Schmalseite 42 den Umluft-Austritts-Öffnungen 18 zugewandt.

Bei der angenähert sinusförmigen verlaufenden Drehzahl-Variation 44 ändert sich diese zwischen einem Drehzahlwert-Minimum U₁ und einem Drehzahlwert-Maximum U₂. Diese Drehzahl-Variation 44 erfolgt synchronisiert mit der Stellung des Backwagens 3 im Backraum 2 derart, dass zu den Zeitpunkten t₀ und t₂ das Drehzahlwert-Minimum U₁ und zu den Zeitpunkten t₁ und t₃ das Drehzahlwert-Maximum U₂ erreicht wird. Dies führt dazu, dass dann, wenn eine Schmalseite 42 der Etage 40 den Umluft-Eintritts-Öffnungen 19 zugewandt ist, diese sich schneller an den Umluft-Eintritts-Öffnungen 19 vorbei bewegt, als sich die Längsseite 41 dann, wenn sie den Umluft-Eintritts-Öffnungen 19 zugewandt ist, an diesen vorbei bewegt. Hierdurch wird vermieden, dass Backgüter 25, die an den Schmalseiten 42 auf den Etagen 40 angeordnet sind, zu lange der heißeren Zone im Backraum 2 benachbart den Umluft-Eintritts-Öffnungen 19 ausgesetzt sind. Analog zum oben im Zusammenhang mit Fig. 5 Beschriebenen wird eine zu starke Temperaturschwankung der einzelnen Backgüter 25 vermieden und dadurch ein gleichmäßigeres Backergebnis erreicht.

Der Drehzahl-Variation 44 während eines Umlaufs des Backwagens 3 im Backraum 2 kann noch eine Drehzahländerung während des gesamten Backvorgangs entsprechend dem im Zusammenhang mit Fig. 3 Ausgeführten überlagert sein.

Je nach den gewünschten thermischen Verhältnissen für das Backgut 25 während des Backvorgangs im Backraum 2 können auch andere Drehzahl-Variationen 44 eingestellt sein. Die Art der eingestellten Drehzahl-Variation hängt unter anderem noch von der Anzahl und Anordnung der Umluft-Eintritts-Öffnungen 19 und Umluft-Austritts-Öffnungen 18 sowie von der Geometrie des Backraums 2 sowie zusätzlich noch von gegebenenfalls eingesetzten Luftführungs-Elementen für den Umluftstrom 20 sowie schließlich vom gewünschten Backergebnis ab.

Eine die rechteckige Geometrie der Etagen 40 des Stikkenofens nach den Fig. 7 und 8 noch feiner berücksichtigende alternative Drehzahl-Variation 45 ist in Fig. 9 als strichpunktierte Linie dargestellt. Hierbei wird berücksichtigt, dass sich die Backgüter 25, die im Bereich der Eckabschnitte 43 auf den Etagen 40 angeordnet sind, während eines Umlaufs des Backwagens 3 im Backraum 2 den Umluft-Eintritts-Öffnungen 19 am stärksten annähern. Immer, wenn eine derartige Annäherung erfolgt, zum Beispiel während des Zeitpunkts t_{1/2} nach Fig. 8, wird über den Frequenz-Umrichter 26 das Drehzahlwert-Maximum U₂ eingestellt. Da insgesamt vier Eckabschnitte 43 während eines vollen Umlaufs des Backwagens 3 im Backraum 2 die Umluft-Eintritts-Öffnungen 19 passieren, geschieht diese Einstellung während der Drehzahl-Variation 45 viermal. Wenn die Schmalseiten 42 jeweils den Umluft-Eintritts-Öffnungen 19 zugewandt sind, erfolgt verglichen mit dem Drehzahlwert-Maximum U₂ eine erste, relativ schwache Absenkung der Drehzahl auf einen Drehzahlwert U'₁. Dieser Wert wird zu den Zeitpunkten t₁ und t₃ erreicht. Dann, wenn jeweils die Längsseiten 41 den Umluft-Eintritts-Öffnungen 19 zugewandt sind, erfolgt auch bei der Drehzahl-Variation 45 eine Absenkung der Drehzahl auf das Drehzahlwert-Minimum U₁. Immer dann, wenn bei der Drehzahl-Variation 45 die Eckabschnitte 43 den Umluft-Eintritts-Öffnungen 19 benachbart sind, dreht sich der Backwagen 3 am schnellsten.

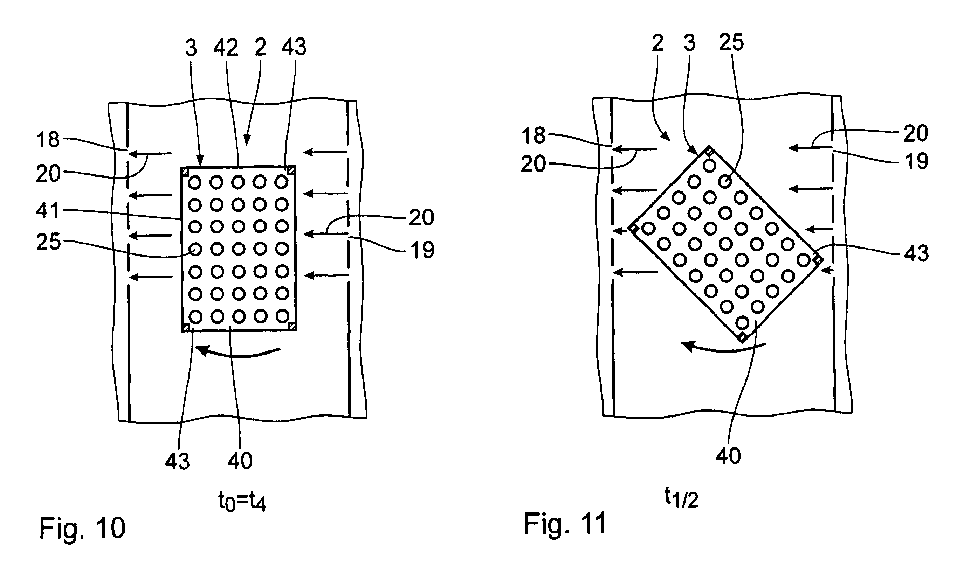

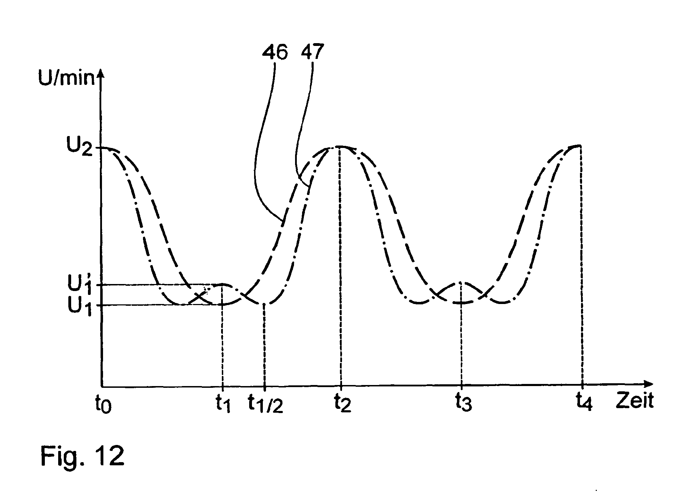

Eine weitere Variante eines Stikkenofens mit rotierendem Backwagen ist in den Fig. 10 und 11 dargestellt. Gezeigt sind zwei Momentaufnahmen bei der Drehung des Backwagens im Stikkenofen, wobei die gezeigten Stellungen denjenigen der Fig. 7 und 8 entsprechen. Bauteile, die schon unter Bezugnahme auf die Stikkenöfen nach den Fig. 1 bis 9 erläutert wurden, tragen die gleichen Bezugszeichen und werden nicht nochmals im Einzelnen erläutert.

Im Unterschied zum Stikkenofen nach den Fig. 7 und 8 fehlen bei demjenigen, der in den Fig. 10 und 11 dargestellt ist, die beiden in diesen Fig. am weitesten unten dargestellten Umluft-Eintritts-Öffnungen 19 sowie die hierzu korrespondierenden, gegenüberliegenden beiden Umluft-Austritts-Öffnungen 18. Die relative Anordnung des Backwagens 3 zu den verbleibenden Umluft-Eintritts-Öffnungen 19 und Umluft-Austritts-Öffnungen 18 ist beim Stikkenofen nach den Fig. 10 und 11 die gleiche, wie bei dem nach den Fig. 7 und 8. Dies führt dazu, dass Abschnitte des Backwagens 3, die von dessen Drehachse weiter entfernt sind, während eines Teils einer Umdrehung des Backwagens 3 im Backraum 2 der Umluft nicht im gleichen Maße ausgesetzt sind, wie die restlichen Abschnitte, da sie Bereiche des Backraums 2 durchlaufen, die nicht direkt zwischen den Umluft-Eintritts-Öffnungen 19 und den Umluft-Austritts-Öffnungen 18 angeordnet sind.

Während des Durchlaufens dieser zuletzt genannten Bereiche des Backraums 2 werden Backgüter 25 auf diesen zur Drehachse des Backwagens 2 weiter entfernten Abschnitten daher anders gebacken als Backgüter 25 auf den der Drehachse des Backwagens 3 näher benachbarten, insbesondere auf den zentralen, Abschnitten auf den Etagen 40 des Backwagens 3. Dieser Unterschied im Backvorgang wird ausgeglichen durch Drehzahl-Variationen 46, 47, die in Fig. 12 gezeigt sind. Die Zuordnung der Zeitpunkte t₀, t₁, t_{1/2}, t₂, t₃ sowie t₄ zur jeweiligen Stellung des Backwagens 3 im Backraum 2 entspricht dabei derjenigen, die oben im Zusammenhang mit Fig. 9 erläutert wurde. Die Drehzahl-Variation 46 für den Stikkenofen nach den Fig. 10 und 11 entspricht der Drehzahl-Variation 44 in Fig. 9 mit dem Unterschied, dass anstelle einer sinusförmigen Variation (Drehzahl-Variation 44) nun eine im Wesentlichen kosinusförmige Drehzahl-Variation (Drehzahl-Variation 46) erfolgt. Die Drehzahl ändert sich also zwischen einem Drehzahlwert-Maximum U₂ dann, wenn die Längsseiten 41 der Etagen 40 den Umluft-Eintritts-Öffnungen 19 beziehungsweise den Umluft-Austritts-Öffnungen 18 zugewandt sind, und einem Drehzahlwert-Minimum U₁, dann, wenn die Schmalseiten 42 der Etagen 40 den Umluft-Eintritts-Öffnungen 19 beziehungsweise den Umluft-Austritts-Öffnungen 18 zugewandt sind. Dies führt dazu, dass die Zeiten, in denen Abschnitte des Backwagens 3 aus dem Bereich zwischen den Umluft-Eintritts-Öffnungen 19 und den Umluft-Austritts-Öffnungen 18 herausragen, minimiert sind. Dann, wenn die Schmalseiten 42 der Etagen 40 den Umluft-Eintritts-Öffnungen 19 beziehungsweise den Umluft-Austritts-Öffnungen 18 zugewandt sind, liegt der gesamte Backwagen 3 zwischen den Umluft-Einritts-Öffnungen 19 und den Umluft-Austritts-Öffnungen 18, sodass dann ein gleichmäßiges Backen des gesamten auf dem Backwagen 3 vorliegenden Backguts 25 möglich ist.

Die alternative Drehzahl-Variation 47 für den Stikkenofen nach den Fig. 10 und 11 entspricht einer Umkehrung der Drehzahl-Variation 45. Während bei der Drehzahl-Variation 45 für den Stikkenofen nach den Fig. 7 und 8 der Backwagen 3 sich immer dann am schnellsten dreht, wenn die Eckabschnitte 43 den Umluft-Eintritts-Öffnungen 19 zugewandt sind, dreht sich bei der Drehzahl-Variation 47 der Backwagen 3 immer dann am langsamsten, nämlich mit dem Drehzahlwert-Minimum U₁, wenn die Eckabschnitte 43 den Umluft-Eintritts-Öffnungen 19 zugewandt sind. Dies begünstigt ein effizientes Backen von Backgut 25 im Bereich der Eckabschnitte 43, da dieses Backgut zu anderen Zeiten der Umdrehung des Backwagens 3 im Backraum 2 relativ weit vom Bereich zwischen den Umluft-Eintritts-Öffnungen 19 und den Umluft-Austritts-Öffnungen 18 entfernt ist. Dann, wenn eine Schmalseite 42 des Backwagens 3 den Umluft-Eintritts-Öffnungen 19 zugewandt ist, erfolgt gegenüber dem Drehzahlwert-Minimum U₁ eine leichte Beschleunigung der Drehzahl des Backwagens 3 auf einen gegenüber dem Drehzahlwert U₁ leicht erhöhten Drehzahlwert U_{1'}.

Die Drehzahl-Variationen 44 bis 47 oder auch andere Drehzahl-Variationen, die phasensynchron zur Umdrehung des Backwagens 3 im Backraum 2 erfolgen, müssen nicht elektronisch über den Steuerrechner 2 und den Frequenz-Umrichter 26 eingestellt sein. Alternativ ist es auch möglich, eine derartige phasensynchrone Drehzahl-Variation über ein mechanisches Drehzahl-Variationsglied, zum Beispiel eine Kurvenscheibe anstelle zum Beispiel des runden Ritzels 24 zu bewerkstelligen. Derartige mechanische Umsetzungen einer phasensynchronen Drehzahl-Variation sind dem Fachmann bekannt.

## Patentansprüche

1. Stikkenofen mit einem Backraum (2), der einen um seine Hochachse rotierenden Etagen-Backwagen (3) aufnimmt,
- mit einander gegenüberliegenden, den Backraum (2) an zwei Seiten begrenzenden Backraum-Begrenzungs-Wänden (4, 5), die Umluft-Eintritts-Öffnungen (19) und Umluft-Austritts-Öffnungen (18) aufweisen,
- mit einer einen Umluftstrom (20) erzeugenden Umluftquelle (11, 12, 14),
- wobei der Umluftstrom (20) derart geführt ist, dass er über die Umluft-Eintritts-Öffnungen (19) in den Backraum (2) eintritt und über die Umluft-Austritts-Öffnungen aus dem Backraum (2) austritt,
**dadurch gekennzeichnet, dass**
- eine Antriebseinrichtung (21, 22, 23; 33, 22', 23') zur Rotation des Etagen-Backwagens (3) mit variabler Drehzahl vorgesehen ist,
- die Antriebseinrichtung (21, 22, 23; 33, 22, 23') derart ausgeführt ist, dass sie die Drehzahl des Etagen-Backwagens (3) während einer Umdrehung von diesem variiert.

2. Stikkenofen nach Anspruch 1, **dadurch gekennzeichnet, dass** die Antriebseinrichtung (21, 22, 23 ; 33, 22', 23') einen Elektromotor (22, 22') umfasst.

3. Stikkenofen nach Anspruch 2, **dadurch gekennzeichnet, dass** der Elektro-Motor (22; 22') mittels eines Frequenz-Umrichters (26) drehzahlregelbar ist.

4. Stikkenofen nach Anspruch 3, **dadurch gekennzeichnet, dass** der Frequenz-Umrichter (26) über ein Backprogramm ansteuerbar ist.

5. Stikkenofen nach einem der Ansprüche 1 bis 4, **gekennzeichnet durch** einen Etagen-Backwagen (3) mit nicht rotationssymmetrischen Etagen (40), wobei die Antriebseinrichtung (21, 22, 23; 33, 22', 23') derart ausgeführt ist, dass sie die Drehzahl des Etagen-Backwagens (3) dann erhöht, wenn ein der Drehachse des Etagen-Backwagens (3) weiter entfernter erster Abschnitt (43; 42) der Etage (40) den Umluft-Eintritts-Öffnungen (19) benachbart ist und dann absenkt, wenn ein der Drehachse des Etagen-Backwagens (3) näher benachbarter zweiter Abschnitt (42, 41; 41) der Etage (40) den Umluft-Eintritts-Öffnungen (19) benachbart ist.

6. Stikkenofen nach einem der Ansprüche 1 bis 4, **gekennzeichnet durch** einen Etagen-Backwagen (3) mit nicht rotationssymmetrischen Etagen (40), wobei die Antriebseinrichtung (21, 22, 23; 33, 22', 23') derart ausgeführt ist, dass sie die Drehzahl des Etagen-Backwagens (3) dann absenkt, wenn ein der Drehachse des Etagen-Backwagens (3) weiter entfernter erster Abschnitt (43; 42) der Etage (40) den Umluft-Eintritts-Öffnungen (19) benachbart ist und dann erhöht, wenn ein der Drehachse des Etagen-Backwagens (3) näher benachbarter zweiter Abschnitt (42, 41; 41) der Etage (40) den Umluft-Eintritts-Öffnungen (19) benachbart ist.

7. Stikkenofen nach einem der Ansprüche 1 bis 6, **dadurch gekennzeichnet, dass** die Etagen (40) rechteckig ausgeführt sind.

8. Stikkenofen nach Anspruch 7, **dadurch gekennzeichnet, dass** die Antriebseinrichtung (21, 22, 23; 33; 21', 22') derart ausgeführt ist, dass sie die Drehzahl des Etagen-Backwagens (3) dann erhöht, wenn ein Eckabschnitt (43) der Etagen (40) den Umluft-Eintritts-Öffnungen (19) zugewandt ist, und dann absenkt, wenn eine Seite (41, 42) der Etage (40) den Umluft-Eintritts-Öffnungen (19) zugewandt ist.

9. Stikkenofen nach Anspruch 7, **dadurch gekennzeichnet, dass** die Antriebseinrichtung (21, 22, 23; 33; 21', 22') derart ausgeführt ist, dass sie die Drehzahl des Etagen-Backwagens (3) dann absenkt, wenn ein Eckabschnitt (43) der Etagen (40) den Umluft-Eintritts-Öffnungen (19) zugewandt ist, und dann erhöht, wenn eine Seite (41, 42) der Etage (40) den Umluft-Eintritts-Öffnungen (19) zugewandt ist.

10. Stikkenofen nach einem der Ansprüche 7 bis 9, **gekennzeichnet durch** eine rechteckige Etage (40) mit verschieden lang ausgeführten Seiten (41, 42), wobei die Antriebseinrichtung (21, 22, 23; 33, 21', 22') derart ausgeführt ist, dass je nach Seitenlänge eine Drehzahleinstellung auf verschiedene Drehzahlwerte erfolgt.

11. Stikkenofen nach Anspruch 10, **dadurch gekennzeichnet, dass** die Antriebseinrichtung (21, 22, 23; 33, 21', 22') derart ausgeführt ist, dass sie dann, wenn eine Längsseite (41) den Umluft-Eintritts-Öffnungen (19) zugewandt ist, eine Einstellung auf einen ersten Drehzahlwert U₁ durchführt und dann, wenn eine Schmalseite (42) den Umluft-Eintritts-Öffnungen (19) zugewandt ist, eine Einstellung auf einen im Vergleich zum ersten Drehzahlwert U₁ größeren zweiten Drehzahlwert U₂ durchführt.

12. Stikkenofen nach Anspruch 10, **dadurch gekennzeichnet, dass** die Antriebseinrichtung (21, 22, 23; 33, 21', 22') derart ausgeführt ist, dass sie dann, wenn eine Schmalseite (42) den Umluft-Eintritts-Öffnungen (19) zugewandt ist, eine Einstellung auf einen ersten Drehzahlwert U₁ durchführt und dann, wenn eine Längsseite (41) den Umluft-Eintritts-Öffnungen (19) zugewandt ist, eine Einstellung auf einen im Vergleich zum ersten Drehzahlwert U₁ größeren zweiten Drehzahlwert U₂ durchführt.

## Claims

1. A rack oven with a baking chamber (2) which accommodates a movable rack (3) that rotates about its vertical axis, comprising
- baking-chamber defining walls (4, 5) which are located opposite each other, defining the baking chamber (2) on two sides and having recirculation-air inlets (19) and recirculation-air outlets (18);
- a source (11, 12, 14) which produces a flow (20) of recirculation air;
- the recirculation-air flow (20) being guided such that it enters the baking chamber (2) via the recirculation-air inlets (19) and leaves the baking chamber (2) via the recirculation-air outlets;
**characterized**
- **in that** a drive mechanism (21, 22, 23; 33, 22', 23') is provided for rotation of the movable rack (3) at a variable speed;
- **in that** the drive mechanism (21, 22, 23; 33, 22', 23') is constructed such that it varies the speed of the movable rack (3) during a revolution thereof.

2. A rack oven according to claim 1, **characterized in that** the drive mechanism (21, 22, 23; 33, 22', 23') comprises an electric motor (22, 22').

3. A rack oven according to claim 2, **characterized in that** the electric motor (22; 22') is speed-variable by means of a frequency converter (26).

4. A rack oven according to claim 3, **characterized in that** the frequency converter (26) is selectable via a baking program.

5. A rack oven according to one of claims 1 to 4, **characterized by** a movable rack (3) with decks (40) which are not rotationally symmetric, with the drive mechanism (21, 22, 23; 33, 22', 23') being constructed such that it increases the speed of the movable rack (3) when a first section (43; 42) of the deck (40) that is more remote from the axis of rotation of the movable rack (3) adjoins the recirculation-air inlets (19), and decreases it when a second section (42, 41; 41) of the deck (40) that is closer to the axis of rotation of the movable rack (3) adjoins the recirculation-air inlets (19).

6. A rack oven according to one of claims 1 to 4, **characterized by** a movable rack (3) with decks (40) which are not rotationally symmetric, with the drive mechanism (21, 22, 23; 33, 22', 23') being constructed such that it decreases the speed of the movable rack (3) when a first section (43; 42) of the deck (40) that is more remote from the axis of rotation of the movable rack (3) adjoins the recirculation-air inlets (19), and increases it when a second section (42, 41; 41) of the deck (40) that is closer to the axis of rotation of the movable rack (3) adjoins the recirculation-air inlets (19).

7. A rack oven according to one of claims 1 to 6, **characterized in that** the decks (40) are rectangular.

8. A rack oven according to claim 7, **characterized in that** the drive mechanism (21, 22, 23; 33; 21', 22') is constructed such that it increases the speed of the movable rack (3) when a corner section (43) of the decks (40) is turned towards the recirulation-air inlets (19), and decreases it when a side (41, 42) of the deck (40) is turned towards the recirculation-air inlets (19).

9. A rack oven according to claim 7, **characterized in that** the drive mechanism (21, 22, 23; 33; 21', 22') is constructed such that it decreases the speed of the movable rack (3) when a corner section (43) of the decks (40) is turned towards the recirulation-air inlets (19), and increases it when a side (41, 42) of the deck (40) is turned towards the recirculation-air inlets (19).

10. A rack oven according to one of claims 7 to 9, **characterized by** a rectangular deck (40) with sides (41, 42) of varying lengths, the drive mechanism (21, 22, 23; 33, 21', 22') being constructed such that adjustment to varying speeds takes place in dependence on the side length.

11. A rack oven according to claim 10, **characterized in that** the drive mechanism (21, 22, 23; 33, 21', 22') is constructed such that when a longitudinal side (41) is turned towards the recirculation-air inlets (19), it makes an adjustment to a first speed U₁, and when a narrow side (42) is turned towards the recirculation-air inlets (19), is makes an adjustment to a second speed U₂ which exceeds the first speed U₁.

12. A rack oven according to claim 10, **characterized in that** the drive mechanism (21, 22, 23; 33, 21', 22') is constructed such that when a narrow side (42) is turned towards the recirculation-air inlets (19), it makes an adjustment to a first speed U₁, and when a longitudinal side (41) is turned towards the recirculation-air inlets (19), it makes an adjustment to a second speed U₂ which exceeds the first speed U₁.

## Revendications

1. Four à chariot avec une chambre de cuisson (2) qui reçoit un chariot de cuisson à étages (3) rotatif autour de son axe vertical,
- avec des parois de délimitation de chambre de cuisson (4, 5) à l'opposée les unes des autres, délimitant la chambre de cuisson (2) sur deux côtés, qui comportent des ouvertures d'entrée d'air ambiant (19) et des ouvertures de sortie d'air ambiant (18),
- avec une source d'air ambiant (11, 12, 14) générant un courant d'air ambiant (20),
- dans lequel le courant d'air ambiant (20) est guidé de telle manière qu'il entre dans la chambre de cuisson (2) par les ouvertures d'entrée d'air ambiant (19) et qu'il sort de la chambre de cuisson (2) par les ouvertures de sortie d'air ambiant,
**caractérisé en ce que**
- il est prévu un dispositif d'entraînement (21, 22, 23 ; 33, 22', 23') à vitesse de rotation variable pour la rotation du chariot de cuisson à étages (3),
- le dispositif d'entraînement (21, 22, 23 ; 33, 22', 23') étant conçu de telle manière qu'il fait varier la vitesse de rotation du chariot de cuisson à étages (3) pendant une rotation.

2. Four à chariot selon la revendication 1, **caractérisé en ce que** le dispositif d'entraînement (21, 22, 23 ; 33, 22', 23') comprend un moteur électrique (22, 22').

3. Four à chariot selon la revendication 2, **caractérisé en ce que** la vitesse de rotation du moteur électrique (22, 22') peut être réglée à l'aide d'un convertisseur de fréquence (26).

4. Four à chariot selon la revendication 3, **caractérisé en ce que** le convertisseur de fréquence (26) peut être commandé par un programme de cuisson.

5. Four à chariot selon l'une quelconque des revendications 1 à 4, **caractérisé par** un chariot de cuisson à étages (3) avec des étages non symétriques en rotation (40), le dispositif d'entraînement (21, 22, 23 ; 33, 22', 23') étant conçu de telle manière qu'il augmente la vitesse de rotation du chariot de cuisson à étages (3) lorsqu'un premier segment (43 ; 42) de l'étage (40) plus éloigné de l'axe de rotation du chariot de cuisson à étages (3) est adjacent aux ouvertures d'entrée d'air ambiant (19) et qu'il la diminue lorsqu'un deuxième segment (42, 41 ; 41) de l'étage (40) plus près de l'axe de rotation du chariot de cuisson à étages (3) est adjacent aux ouvertures d'entrée d'air ambiant (19).

6. Four à chariot selon l'une quelconque des revendications 1 à 4, **caractérisé par** un chariot de cuisson à étages (3) avec des étages non symétriques en rotation (40), le dispositif d'entraînement (21, 22, 23 ; 33, 22', 23') étant conçu de telle manière qu'il diminue la vitesse de rotation du chariot de cuisson à étages (3) lorsqu'un premier segment (43 ; 42) de l'étage (40) plus éloigné de l'axe de rotation du chariot de cuisson à étages (3) est adjacent aux ouvertures d'entrée d'air ambiant (19) et qu'il l'augmente lorsqu'un deuxième segment (42, 41 ; 41) de l'étage (40) plus près de l'axe de rotation du chariot de cuisson à étages (3) est adjacent aux ouvertures d'entrée d'air ambiant (19).

7. Four à chariot selon l'une quelconque des revendications 1 à 6, **caractérisé en ce que** les étages (40) sont rectangulaires.

8. Four à chariot selon la revendication 7, **caractérisé en ce que** le dispositif d'entraînement (21, 22, 23 ; 33, 22', 23') est conçu de telle manière qu'il augmente la vitesse de rotation du chariot de cuisson à étages (3) lorsqu'un segment d'angle (43) des étages (40) est orienté vers les ouvertures d'entrée d'air ambiant (19) et qu'il la diminue lorsqu'un côté (41, 42) de l'étage (40) est orienté vers les ouvertures d'entrée d'air ambiant (19).

9. Four à chariot selon la revendication 7, **caractérisé en ce que** le dispositif d'entraînement (21, 22, 23 ; 33, 22', 23') est conçu de telle manière qu'il diminue la vitesse de rotation du chariot de cuisson à étages (3) lorsqu'un segment d'angle (43) des étages (40) est orienté vers les ouvertures d'entrée d'air ambiant (19) et qu'il l'augmente lorsqu'un côté (41, 42) de l'étage (40) est orienté vers les ouvertures d'entrée d'air ambiant (19).

10. Four à chariot selon l'une quelconque des revendications 7 à 9, **caractérisé par** un étage rectangulaire (40) avec des côtés de longueurs différentes (41, 42), le dispositif d'entraînement (21, 22, 23 ; 33, 22', 23') étant conçu de telle manière que la vitesse de rotation est réglée à des valeurs de vitesse de rotation différentes en fonction de la longueur des côtés.

11. Four à chariot selon la revendication 10, **caractérisé en ce que** le dispositif d'entraînement (21, 22, 23 ; 33, 22', 23') est conçu de telle manière qu'il effectue un réglage à une première valeur de vitesse de rotation U₁ lorsqu'un côté long (41) est orienté vers les ouvertures d'entrée d'air ambiant (19) et qu'il effectue un réglage à une deuxième valeur de vitesse de rotation U₂ supérieure à la première valeur de vitesse de rotation U₁ lorsqu'un côté court (42) est orienté vers les ouvertures d'entrée d'air ambiant (19).

12. Four à chariot selon la revendication 10, **caractérisé en ce que** le dispositif d'entraînement (21, 22, 23 ; 33, 22', 23') est conçu de telle manière qu'il effectue un réglage à une première valeur de vitesse de rotation U₁ lorsqu'un côté court (42) est orienté vers les ouvertures d'entrée d'air ambiant (19) et qu'il effectue un réglage à une deuxième valeur de vitesse de rotation U₂ supérieure à la première valeur de vitesse de rotation U₁ lorsqu'un côté long (41) est orienté vers les ouvertures d'entrée d'air ambiant (19).
